# EUROPEAN PATENT SPECIFICATION

(11) **EP 3 647 923 B1**
(45) Date of publication and mention of the grant of the patent: **14.05.2025**
(21) Application number: 19205752.9
(22) Date of filing: 28.10.2019
(51) Int. Cl.: G06F 3/048, G06F 3/14, G09G 5/14, G09G 5/377, G08G 5/00

(54) **SYSTEM FOR GENERATING AN ANIMATED DISPLAY**
SYSTEM ZUR ERZEUGUNG EINER ANIMIERTEN ANZEIGE
SYSTÈME DE GÉNÉRATION D'UN AFFICHAGE ANIMÉ

(30) Priority: 31.10.2018 IN 201841041163; 29.07.2019 US 201916525087
(43) Date of publication of application: 06.05.2020
(73) Proprietor: Honeywell International Inc., Charlotte, NC 28202 (US)
(72) Inventor: MALVIYA, Pramod Kumar, Morris Plains, NJ New Jersey 07950 (US); FEYEREISEN, Thea, Morris Plains, NJ New Jersey 07950 (US); HE, Gang, Morris Plains, NJ New Jersey 07950 (US); WANG, Rui, Morris Plains, NJ New Jersey 07950 (US)
(74) Representative: LKGlobal UK Ltd.

(56) References cited:
- EP-A2- 2 610 590
- WO-A1-2014/062102
- US-A1- 2008 231 643
- US-B1- 9 858 823

## Description

### TECHNICAL FIELD

The present disclosure generally relates to aircraft operations, and more particularly relates to systems and methods for generating an animated display.

### BACKGROUND

During operations, such as flight operations in an aircraft, the aircraft often includes multiple displays in a cockpit with each display including data related to the aircraft or a flight plan. The displays may include different layers of displays such as vertical situation displays, lateral situation displays, synthetic vision displays, and the like. However, there is a need for a system and method for generating an animated aircraft display that avoids abrupt transitions between layers.

US9858823 discloses an interactive record keeping system includes a display system, a user input device, an input-output interface and a controller. The controller is configured to receive user input data indicative of a user display preference and a known waypoint location from the user input device, receive aircraft data indicative of a current aircraft operating parameter and receive environmental data indicative of a current environmental condition, both correlating with the known waypoint location. The controller is further configured to calculate an aircraft performance parameter based on the received aircraft data; generate display data based on the calculated aircraft performance parameter, the received environmental data, and the user display preference; provide the display data to the display system; and store the calculated aircraft performance parameter and the environmental data in a memory. The display system of US9858823 does include the features that the opaqueness of a map layer is gradually increased or decreased by a predetermined fade delta value which represents a rate of change to the opaqueness and that the predetermined rate of change of opaqueness is overridden in case of a threat condition.

WO2014062102A1 discloses a display method, a computer program for performing the steps of the display method and a display system, the display system having for example: at least one display unit arranged to present at least one display image, at least one memory unit comprising information related to for example descriptions of a set of default graphics display objects and configuration data. The configuration data is arranged to define: at least one transparent display layer, at least one transparent display container associated to the at least one transparent display layer and at least one display mode. Each of said at least one display mode comprising a predetermined selection of one or more of said at least one transparent display container of one or more of said at least one display layer.

### BRIEF SUMMARY

The present invention in its various aspects is as set out in the appended claims. This summary is provided to describe select concepts in a simplified form that are further described in the Detailed Description. This summary is not intended to identify key or essential features of the claimed subject matter, nor is it intended to be used as an aid in determining the scope of the claimed subject matter.

A system is provided for generating an animated display for an aircraft. The system comprises: a flight management system (FMS) configured to control one or more control systems of the aircraft based upon flight plan data for the aircraft; and a map layer display system that is controlled by the FMS, comprising, a plurality of displays, where each of the plurality of displays shows a different view of the flight plan data; a user interface (UI) system configured to receive user input; and a processor communicatively coupled to the plurality of displays and the UI, the processor configured to: determine when the user input received by the UI corresponds to a layer on one of the plurality of displays; increase, when the user input includes a request to add the layer to one of the plurality of displays, opaqueness of the layer from zero percent to one-hundred percent; decrease, when the user input includes a request to remove the layer from one of the plurality of displays, opaqueness of the layer from one-hundred percent to zero-percent; and generate instructions to display the layer at the opaqueness of the layer.

Furthermore, other desirable features and characteristics of the system will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a diagram of an in-flight aircraft that contains an onboard flight management system (FMS) along with a visual data system in accordance with one embodiment;
FIG. 2 shows a block diagram of a flight management computer (FMC) (or flight management system (FMS)) onboard an aircraft utilized to communicate data between existing onboard avionics systems or line-replaceable units (LRUs) in accordance with one embodiment;
FIG.3 shows a block diagram of a visual display system with a map layer display in accordance with one embodiment; and
FIGS. 4A - 4B show flowcharts for a method for generating an animated aircraft display with layers in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A method and system has been developed for generating an animated display. The method comprises receiving a user request for a change in a layer shown on a display that shows a view of relevant data. The user request is received by a user interface (UI) that is part of a map layer display system. The system determines which specific layer corresponds to user request for a change to the display. When the user request is to add the layer to the display, the opaqueness of the layer gradually increases from zero percent to one-hundred percent. When the user request is to remove the layer from the display, the opaqueness of the layer gradually decreases from one-hundred percent to zero percent. Finally, the system generates instructions to display the layer at the opaqueness on the display.

Before proceeding further, it is noted that, for convenience, the following description is in the context of an aircraft environment.

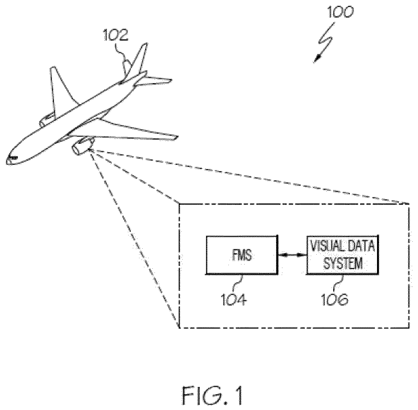

Turning now to FIG. 1, a diagram 100 is shown of an in-flight aircraft 102 that contains an onboard flight management system (FMS) 104 along with a visual data system 106 that is accessed by the FMS 104 in accordance with one embodiment. In alternative embodiments, the visual data system 106 may be integrated as part of the FMS 104. The FMS 104, as is generally known, is a specialized computer that automates a variety of in-flight tasks such as in-flight management of the flight plan. Using various sensors such as global positioning system (GPS), the FMS 104 determines the aircraft's position and guides the aircraft along its flight plan using its navigation database. From the cockpit, the FMS 104 is normally controlled through a visual display device such as a control display unit (CDU) which incorporates a small screen, a keyboard or a touchscreen. The FMS 104 displays the flight plan and other critical flight data to the aircrew during operation.

The FMS 104 may have a built-in electronic memory system that contains a navigation database. The navigation database contains elements used for constructing a flight plan. In some embodiments, the navigation database may be separate from the FMS 104 and located onboard the aircraft while in other embodiments the navigation database may be located on the ground and relevant data provided to the FMS 104 via a (non-illustrated) communications link with a (non-illustrated) ground station. The navigation database used by the FMS 104 may typically include: waypoints/intersections; airways; radio navigation aids/navigation beacons; airports; runway; standard instrument departure (SID) information; standard terminal arrival (STAR) information; holding patterns; and instrument approach procedures. Additionally, other waypoints may also be manually defined by pilots along the route.

The flight plan is generally determined on the ground before departure by either the pilot or a dispatcher for the owner of the aircraft. It may be manually entered into the FMS 104 or selected from a library of common routes. In other embodiments the flight plan may be loaded via a communications data link from an airline dispatch center. During preflight planning, additional relevant aircraft performance data may be entered including information such as: gross aircraft weight; fuel weight and the center of gravity of the aircraft. The aircrew may use the FMS 104 to modify the plight flight plan before takeoff or even while in flight for variety of reasons. Such changes may be entered via the CDU. Once in flight, the principal task of the FMS 104 is to accurately monitor the aircraft's position. This may use a GPS, a VHF omnidirectional range (VOR) system, or other similar sensor in order to determine and validate the aircraft's exact position. The FMS 104 constantly cross checks among various sensors to determine the aircraft's position with accuracy.

Additionally, the FMS 104 may be used to perform advanced vertical navigation (VNAV) functions. The purpose of VNAV is to predict and optimize the vertical path of the aircraft. The FMS 104 provides guidance that includes control of the pitch axis and of the throttle of the aircraft. In order to accomplish these tasks, the FMS 104 has detailed flight and engine model data of the aircraft. Using this information, the FMS 104 may build a predicted vertical descent path for the aircraft. A correct and accurate implementation of VNAV has significant advantages in fuel savings and on-time efficiency.

In exemplary embodiments, an existing flight management computer (FMC) (or flight management system (FMS)) onboard an aircraft is utilized to communicate data between existing onboard avionics systems or line-replaceable units (LRUs) and another module coupled to the FMC, which supports or otherwise performs new flight management functionality that is not performed by the FMC. For example, a multifunction control and display unit (MCDU) may support or otherwise perform new flight management functionality based on data from onboard avionics or LRUs received via the FMC. In this regard, the FMC is configured to receive operational or status data from one or more avionics systems or LRUs onboard the aircraft at corresponding avionics interfaces and convert one or more characteristics of the operational data to support communicating the operational data with the MCDU. For purposes of explanation, the subject matter may primarily be described herein in the context of converting operational data received from onboard avionics or LRUs in a first format (e.g., an avionics bus format) into another format supported by the interface with the MCDU, the subject matter described herein is not necessarily limited to format conversions or digital reformatting, and may be implemented in an equivalent manner for converting between other data characteristics, such as, for example, different data rates, throughputs or bandwidths, different sampling rates, different resolutions, different data compression ratios, and the like.

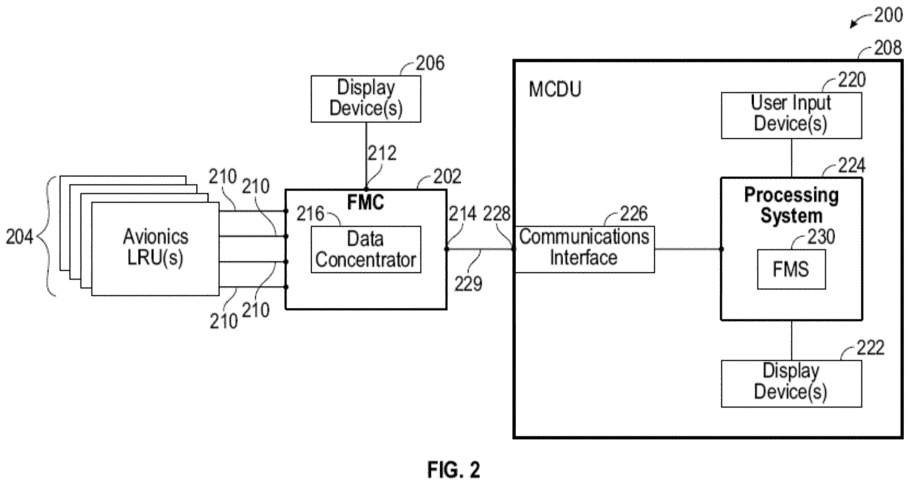

FIG. 2 depicts an exemplary embodiment of an aircraft system 200 suitable for implementation onboard an aircraft 102 shown previously in FIG. 1. The illustrated aircraft system 200 includes a flight management computing module 202 communicatively coupled to a plurality of onboard avionics LRUs 204, one or more display devices 206, and a multifunction computing module 208. It should be appreciated that FIG. 2 depicts a simplified representation of the aircraft system 200 for purposes of explanation, and FIG. 2 is not intended to limit the subject matter in any way.

The flight management computing module 202 generally represents the FMC, the FMS, or other hardware, circuitry, logic, firmware and/or other components installed onboard the aircraft and configured to perform various tasks, functions and/or operations pertaining to flight management, flight planning, flight guidance, flight envelope protection, four-dimensional trajectory generation or required time of arrival (RTA) management, and the like. Accordingly, for purposes of explanation, but without limiting the functionality performed by or supported at the flight management computing module 202, the flight management computing module 202 may alternatively be referred to herein as the FMC. The FMC 202 includes a plurality of interfaces 210 configured to support communications with the avionics LRUs 204 along with one or more display interfaces 212 configured to support coupling one or more display devices 206 to the FMC 202. In the illustrated embodiment, the FMC 202 also includes a communications interface 214 that supports coupling the multifunction computing module 208 to the FMC 202.

The FMC 202 generally includes a processing system designed to perform flight management functions, and potentially other functions pertaining to flight planning, flight guidance, flight envelope protection, and the like. Depending on the embodiment, the processing system could be realized as or otherwise include one or more processors, controllers, application specific integrated circuits, programmable logic devices, discrete gate or transistor logics, discrete hardware components, or any combination thereof. The processing system of the FMC 202 generally includes or otherwise accesses a data storage element (or memory), which may be realized as any sort of non-transitory short or long term storage media capable of storing programming instructions for execution by the processing system of the FMC 202. In exemplary embodiments, the data storage element stores or otherwise maintains code or other computer-executable programming instructions that, when read and executed by the processing system of the FMC 202, cause the FMC 202 to implement, generate, or otherwise support a data concentrator application 216 that performs certain tasks, operations, functions, and processes described herein.

The avionics LRUs 204 generally represent the electronic components or modules installed onboard the aircraft that support navigation, flight planning, and other aircraft control functions in a conventional manner and/or provide real-time data and/or information regarding the operational status of the aircraft to the FMC 202. For example, practical embodiments of the aircraft system 200 will likely include one or more of the following avionics LRUs 204 suitably configured to support operation of the aircraft: a weather system, an air traffic management system, a radar system, a traffic avoidance system, an autopilot system, an autothrottle (or autothrust) system, a flight control system, hydraulics systems, pneumatics systems, environmental systems, electrical systems, engine systems, trim systems, lighting systems, crew alerting systems, electronic checklist systems, and/or another suitable avionics system.

In exemplary embodiments, the avionics interfaces 210 are realized as different ports, terminals, channels, connectors, or the like associated with the FMC 202 that are connected to different avionics LRUs 204 via different wiring, cabling, buses, or the like. In this regard, the interfaces 210 may be configured to support different communications protocols or different data formats corresponding to the respective type of avionics LRU 204 that is connected to a particular interface 210. For example, the FMC 202 may communicate navigation data from a navigation system via a navigation interface 210 coupled to a data bus supporting the ARINC 424 (or A424) standard, the ARINC 629 (or A629) standard, the ARINC 422 (or A422) standard, or the like. As another example, a datalink system or other communications LRU 204 may utilize an ARINC 619 (or A619) compatible avionics bus interface for communicating datalink communications or other communications data with the FMC 202.

The display device(s) 206 generally represent the electronic displays installed onboard the aircraft in the cockpit, and depending on the embodiment, could be realized as one or more monitors, screens, liquid crystal displays (LCDs), a light emitting diode (LED) displays, or any other suitable electronic display(s) capable of graphically displaying data and/or information provided by the FMC 202 via the display interface(s) 212. Similar to the avionics interfaces 210, the display interfaces 212 are realized as different ports, terminals, channels, connectors, or the like associated with the FMC 202 that are connected to different cockpit displays 206 via corresponding wiring, cabling, buses, or the like. In one or more embodiments, the display interfaces 212 are configured to support communications in accordance with the ARINC 661 (or A661) standard. In one embodiment, the FMC 202 communicates with a lateral map display device 206 using the ARINC 702 (or A702) standard.

In exemplary embodiments, the multifunction computing module 208 is realized as a multifunction control and display unit (MCDU) that includes one or more user interfaces, such as one or more input devices 220 and/or one or more display devices 222 (shown previously as 106 in FIG.1), a processing system 224, and a communications module 226. The MCDU 208 generally includes at least one user input device 220 that is coupled to the processing system 224 and capable of receiving inputs from a user, such as, for example, a keyboard, a key pad, a mouse, a joystick, a directional pad, a touchscreen, a touch panel, a motion sensor, or any other suitable user input device or combinations thereof. The display device(s) 222 may be realized as any sort of monitor, screen, LCD, LED display, or other suitable electronic display capable of graphically displaying data and/or information under control of the processing system 224.

The processing system 224 generally represents the hardware, circuitry, logic, firmware and/or other components of the MCDU 208 configured to perform the various tasks, operations, functions and/or operations described herein. Depending on the embodiment, the processing system 224 may be implemented or realized with a general purpose processor, a microprocessor, a controller, a microcontroller, a state machine, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the processing system 224, or in any practical combination thereof. In this regard, the processing system 224 includes or accesses a data storage element (or memory), which may be realized using any sort of non-transitory short or long term storage media, and which is capable of storing code or other programming instructions for execution by the processing system 224. In exemplary embodiments described herein, the code or other computer-executable programming instructions, when read and executed by the processing system 224, cause the processing system 224 to implement with an FMS 230 (shown previously as 104 in FIG.1) additional tasks, operations, functions, and processes described herein.

The communications module 226 generally represents the hardware, module, circuitry, software, firmware and/or combination thereof that is coupled between the processing system 224 and a communications interface 228 of the MCDU 208 and configured to support communications between the MCDU 208 and the FMC 202 via an electrical connection 229 between the MCDU communications interface 228 and the FMC communications interface 214. For example, in one embodiment, the communications module 226 is realized as an Ethernet card or adapter configured to support communications between the FMC 202 and the MCDU 208 via an Ethernet cable 229 provided between Ethernet ports 214, 228. In other embodiments, the communications module 226 is configured to support communications between the FMC 202 and the MCDU 208 in accordance with the ARINC 429 (A429) standard via an A429 data bus 229 provided between A429 ports 214, 228 of the respective modules 202, 208. In yet other embodiments, the communications module 226 is configured to support communications between the FMC 202 and the MCDU 208 in accordance with the ARINC 422 (A422) standard via an A422 data bus 229 provided between A422 ports 214, 228 of the respective modules 202, 208. In yet other embodiments, the communications module 226 is configured to support communications between the FMC 202 and the MCDU 208 in accordance with the ARINC 739 (A739) standard via an A739 data bus 229 provided between A739 ports 214, 228 of the respective modules 202, 208.

In various embodiments, the FMC 202 and MCDU 208 communicate using a different communications protocol or standard than one or more of the avionics LRUs 204 and/or the display devices 206. In such embodiments, to support communications of data between the MCDU 208 and those LRUs 204 and/or display devices 206, the data concentrator application 216 at the FMC 202 converts data from one format to another before retransmitting or relaying that data to its destination. For example, the data concentrator application 216 may convert data received from an avionics LRU 204 to the A429 or Ethernet format before providing the data to the MCDU 208, and vice versa. Additionally, in exemplary embodiments, the FMC 202 validates the data received from an avionics LRU 204 before transmitting the data to the MCDU 208. For example, the FMC 202 may perform debouncing, filtering, and range checking, and/or the like prior to converting and retransmitting data from an avionics LRU 204.

It should be noted that although the subject matter may be described herein in the context of the multifunction computing module 208 being realized as an MCDU, in alternative embodiments, the multifunction computing module 208 could be realized as an electronic flight bag (EFB) or other mobile or portable electronic device. In such embodiments, an EFB capable of supporting an FMS 230 application may be connected to an onboard FMC 202 using an Ethernet cable 229 to support flight management functionality from the EFB in an equivalent manner as described herein in the context of the MCDU.

In one or more embodiments, the MCDU 208 stores or otherwise maintains programming instructions, code, or other data for programming the FMC 202 and transmits or otherwise provides the programming instructions to the FMC 202 to update or otherwise modify the FMC 202 to implement the data concentrator application 216. For example, in some embodiments, upon establishment of the connection 229 between modules 202, 208, the MCDU 208 may automatically interact with the FMC 202 and transmit or otherwise provide the programming instructions to the FMC 202, which, in turn, executes the instructions to implement the data concentrator application 216. In some embodiments, the data concentrator application 216 may be implemented in lieu of flight management functionality by the MCDU 208 reprogramming the FMC 202. In other embodiments, the FMC 202 may support the data concentrator application 216 in parallel with flight management functions. In this regard, the FMC 202 may perform flight management functions, while the FMS 230 application on the MCDU 208 supplements the flight management functions to provide upgraded flight management functionality within the aircraft system 200.

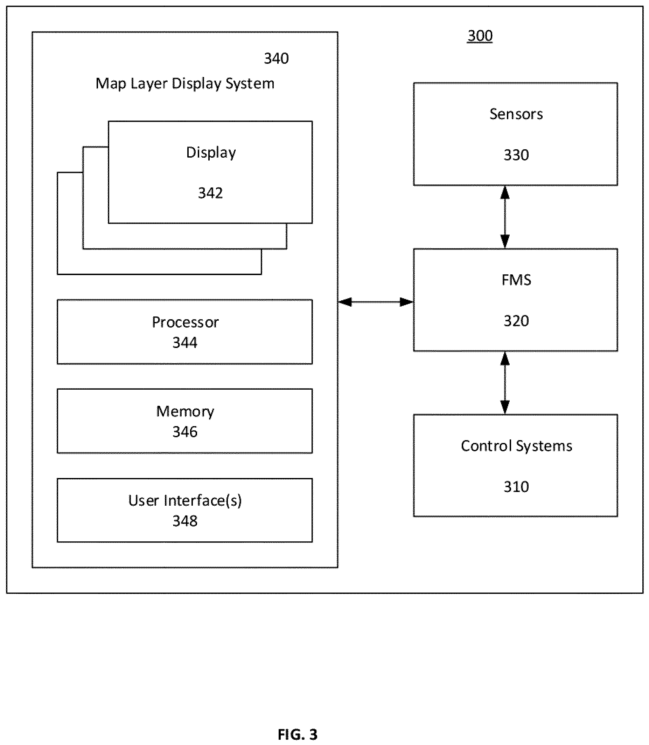

FIG. 3 illustrates an MCDU 300 (shown previously as 208 in FIG. 2), in accordance with an embodiment. The MCDU 300 may be used onboard an airplane, a helicopter, a spacecraft, a drone, or the like, or any combination thereof. The aircraft includes multiple controls systems 310 for controlling the movement of the MCDU 300. The controls systems 310 will vary depending upon the type of aircraft, but may include, for example, one or more engines, rudders, wings, vertical stabilizers, flaps, landing gear, propellers, and the like.

The MCDU 300 further includes a flight management system (FMS) 320. The flight management system 320 manages a flight plan of the aircraft and may use sensors 330 to guide the aircraft along the flight plan utilizing one or more of the control systems 310. The sensors 330 may include, for example, a global positioning system (GPS) sensor, an altitude sensor, a wind speed sensor, a wind direction sensor, or the like. The MCDU 300 further includes a map layer display system 340. The map layer display system 340 controls the presentation of various map layers to improve a user's experience with a display on the MCDU 300. The map layer display system 340 may include one or more displays 342 on the MCDU 300. The displays 342 may include, for example, a lateral situation display, a vertical situation display, a synthetic vision display, or any other display on the aircraft and any combination thereof.

The map layer display system 340 further includes a processor 344 and a memory 346. The processor 344 may be, for example, a central processing unit (CPU), a physics processing unit (PPU), a graphics processing unit (GPU), a field programmable gate array (FPGA), an application specific integrated circuit (ASIC), a microcontroller, or any other logic unit or combination thereof. The memory 346 may be any combination of volatile and non-volatile memory. The memory 346 may store non-transitory computer-readable instructions for implementing the map layer display system 340, as discussed in further detail below. The processor 344 and a memory 346 may be dedicated to the map layer display system 340 or may be shared by one or more other systems in the MCDU 300.

The memory 346 may further store data corresponding to different layers on a map. The layers may include, for example, terrain data, traffic data, flight plan data, fixes (airports, VHF omnidirectional range (VOR), non-directional beacon (NDB) locations, intersections, VOR courses), airspaces, boundaries, gridlines, and the like. Different displays 342 may have different layers depending upon what each display is capable of displaying. The map layer display system 340 fades-in and fades-out layers on the display during range changes, pan changes and display option changes. The display option changes may occur when a user adds or removes a layer from the map using a user interface 348. The user interface 348 may include any combination of a touch screen, a mouse, a trackpad, a trackball, a microphone, buttons, switches, or the like.

As an example, a user could select to remove traffic data from a lateral situation display map. Instead of a sudden shift reflecting the new option, the layer corresponding to the traffic data would fade-out. This fading-in and fading-out improves the user's experience by giving them a better appreciation of the change by giving them enough time to visualize the data that is fading in or out. Visual Aesthetics or "look and feel" is one of the most important features of any graphical user interface. Better aesthetics makes the interface user-friendlier and more popular. Better aesthetics helps the user to understand the meaning of various components and memorize the navigation paths. A better look and feel ultimately makes a GUI more efficient and effective.

The processor 344 may perform the gradual fade-in and fade-out of layers using an animated fade-in or fade-out technique, where previous state/scene/layers gets faded in or out slowly and a new scene is rendered smoothly. This makes the whole state/scene/layer smoothly transition. To achieve the smooth fade-in or fade-out transition, the processor 344 decreases opaqueness and size of a layer (e.g., last icon/symbol) gradually while the same time opaqueness and size of any new layer (e.g., layer which was underneath a removed layer or new icon/symbol/layers) increases gradually until it reaches to a desired opaqueness and size. The rate at which the layer transparency transitions from one state to the other can be a constant or the rate of transition can be controlled by an event such as a threat condition that becomes present within one of the layers.

For any terrain changes from, for example, a pan or a zoom request, the processor 344 generates instructions for the display 342 to fade out the old terrain data and gradually introduce the new terrain data with some blurriness effect to provide a smooth fade in fade out transition during abrupt terrain scene changes. In one embodiment, for example, the processor 344 may blend the existing terrain layer with the new terrain layer to achieve the effect. The change in opaqueness of each layer may be performed on a frame-by-frame basis. In other words, the processor 344 may increase/decrease the opaqueness of a layer gradually over multiple frames of a display.

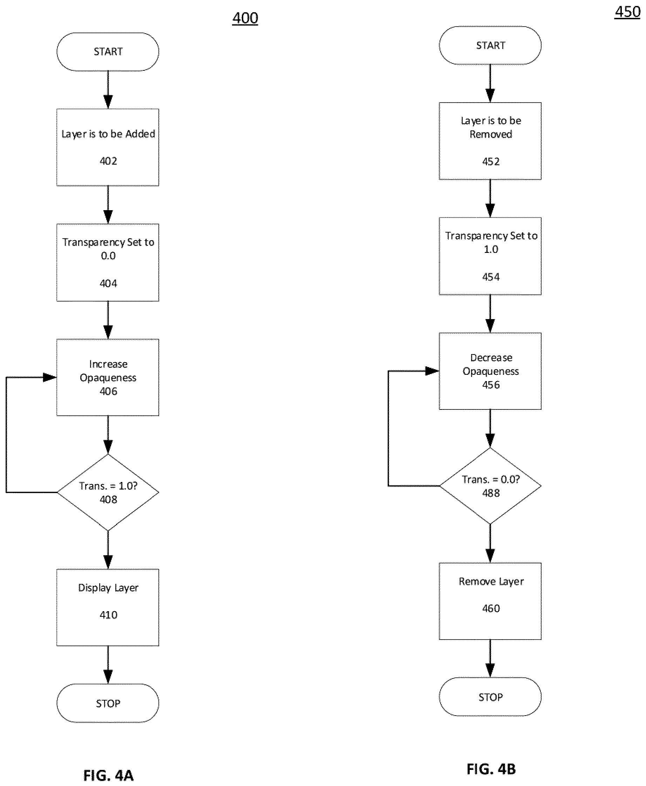

FIGS. 4A - 4B show flowcharts for a method for generating an animated display with layers in accordance with one embodiment. Specifically, the flow diagrams illustrate how the system may add or remove a layer. As seen in FIG. 4A, the process starts upon receiving a request to change a layer that is being displayed 402. The change may be to pan a display, zoom a display, or add or remove layers from a display. FIG. 4A reflects the process 400 of adding a layer, while FIG. 4B reflects the process 450 of removing a layer.

When a layer is to be added 402, the transparency of the layer is initially set to zero 404. By initially setting the transparency to zero (corresponding to 100% transparent), abrupt changes to the display are prevented. The processor processes a logic loop where each time through the logic loop, the opaqueness of the respective layer is increased 406 by a predetermined fade delta (*i.e.,* rate of change by a predetermined amount of increase) until the transparency equals one (corresponding to 100% opaqueness) 408. As the processor goes though the loop, the processor continually displays the respective layers according to their transparency values 410.

Likewise, when a layer is to be removed 452 as shown FIG. 4B, the transparency of the layer is initially set to one 454. By initially setting the transparency to one (corresponding to 100% opaqueness), abrupt changes to the display are prevented. The processor then processes a logic loop where each time through the logic loop, the opaqueness of the respective layer is decreased 456 by a predetermined "fade delta" (*i.e.,* rate of change by a predetermined amount of decrease) until the transparency equals zero 488 (corresponding to 0% opaqueness). As the processor goes though the loop, the processor continually displays the respective layers according to their transparency values 460.

By controlling the fade delta, the processor can control how quickly the respective layer is added or removed from the display. For example, the fade delta may be user specific. In other words, each pilot or operator can define the rate at which layers are added or removed to the display. Fade delta values can be a constant or can be event driven based on events during aircraft operations. In other examples, some display features such as a traffic symbol may not be displayed when flight crews are performing long range planning tasks on a map since these types of targets are not typically discernable on map at long range. When a traffic alert event is present, the fade delta for turning on traffic display in response to the event will become instantaneous, thus allowing immediate visualization of the layer.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

The following description refers to elements or nodes or features being "connected" or "coupled" together. As used herein, unless expressly stated otherwise, "coupled" means that one element/node/feature is directly or indirectly joined to (or directly or indirectly communicates with) another element/node/feature, and not necessarily mechanically. Likewise, unless expressly stated otherwise, "connected" means that one element/node/feature is directly joined to (or directly communicates with) another element/node/feature, and not necessarily mechanically. Thus, additional intervening elements, devices, features, or components may be present in an embodiment of the depicted subject matter.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

## Claims

1. A system for generating an animated display for an aircraft (102), comprising:
a flight management system (320) configured to control one or more control systems of the aircraft (102) based upon flight plan data for the aircraft (102); and
a map layer display system (340) that is controlled by the flight management system (320), comprising:
a plurality of displays (342) installed onboard the aircraft, in the cockpit, where each of the plurality of displays (342) shows a different view of the flight plan data;
a user interface system (348) configured to receive user input; and
a processor (344) communicatively coupled to the plurality of displays (342) and the user interface system (348), the processor (344) configured to:
determine when the user input received by the user interface system (348) corresponds to a layer on one of the plurality of displays (342);
increase opaqueness of the layer from zero percent to one-hundred percent at a predetermined rate of change when the user input includes a request to add the layer to one of the plurality of displays (342), where the opaqueness is increased at the predetermined rate of change by processing a logic loop, wherein each time through the logic loop the opaqueness increases by a predetermined fade delta which represents the rate of change to the opaqueness of a value of less than 100%;
decrease opaqueness of the layer from one-hundred percent to zero-percent at a predetermined rate of change when the user input includes a request to remove the layer from one of the plurality of displays (342), where the opaqueness is decreased at the predetermined rate of change by processing a logic loop, wherein each time through the logic loop the opaqueness decreases by the predetermined fade delta which represents the rate of change to the opaqueness of a value less than 100%; and wherein the processor is further configured to override the predetermined rate of change of opaqueness when a threat condition to the aircraft is detected in one of the layers such that the change in opaqueness is instantaneous and the layer in which the threat condition is detected is visualized immediately; and
generate instructions to display the layer at the opaqueness of the layer.

2. The system of Claim 1, where one of the plurality of displays (342) is a lateral situation display.

3. The system of Claim 1, where one of the plurality of displays (342) is a vertical situation display.

4. The system of Claim 1, where one of the plurality of displays (342) is a synthetic situation display.

5. The system of Claim 1, where the layer shows terrain data.

6. The system of Claim 1, where the layer shows navigational fix data.

7. The system of Claim 1, where the opaqueness of the layer is increased frame by frame when the layer is being added to one of the plurality of displays (342).

8. The system of Claim 1, where the opaqueness of the layer is decreased frame by frame when the layer is being removed from one of the plurality of displays (342).

## Patentansprüche

1. System zum Erzeugen einer animierten Anzeige für ein Flugzeug (102), umfassend:
ein Flugmanagementsystem (320), das dazu konfiguriert ist, ein oder mehrere Steuersysteme des Flugzeugs (102) auf Basis von Flugplandaten für das Flugzeug (102) zu steuern; und
ein Kartenebenen-Anzeigesystem (340), das durch das Flugmanagementsystem (320) gesteuert wird, umfassend:
eine Vielzahl von Anzeigen (342), die an Bord des Flugzeugs in dem Cockpit installiert sind, wobei jede der Vielzahl von Anzeigen (342) eine unterschiedliche Ansicht der Flugplandaten anzeigt;
ein Benutzerschnittstellensystem (348), das dazu konfiguriert ist, eine Benutzereingabe zu empfangen; und
einen Prozessor (344), der kommunikativ mit der Vielzahl von Anzeigen (342) und dem Benutzerschnittstellensystem (348) gekoppelt ist, wobei der Prozessor (344) dazu konfiguriert ist:
zu bestimmen, wenn die von dem Benutzerschnittstellensystem (348) empfangene Benutzereingabe einer Ebene auf einer der Vielzahl von Anzeigen (342) entspricht;
eine Opazität der Ebene von null Prozent auf einhundert Prozent mit einer vorherbestimmten Änderungsrate zu erhöhen, wenn die Benutzereingabe eine Anfrage beinhaltet, die Ebene zu einer der Vielzahl von Anzeigen (342) hinzuzufügen, wobei die Opazität mit der vorherbestimmten Änderungsrate durch Verarbeiten einer Logikschleife erhöht wird, wobei die Opazität jedes Mal durch die Logikschleife um ein vorherbestimmtes Verblassen-Delta erhöht wird, das die Änderungsrate der Opazität eines Wertes von weniger als 100 % darstellt;
eine Opazität der Ebene von einhundert Prozent auf null Prozent mit einer vorherbestimmten Änderungsrate zu reduzieren, wenn die Benutzereingabe eine Anfrage beinhaltet, die Ebene aus einer der Vielzahl von Anzeigen (342) zu entfernen, wobei die Opazität mit der vorherbestimmten Änderungsrate durch Verarbeiten einer Logikschleife reduziert wird, wobei die Opazität jedes Mal durch die Logikschleife um das vorherbestimmte Verblassen-Delta reduziert wird, das die Änderungsrate der Opazität eines Wertes von weniger als 100 % darstellt; und wobei der Prozessor ferner dazu konfiguriert ist, die vorherbestimmte Änderungsrate der Opazität zu übersteuern, wenn ein Bedrohungszustand für das Flugzeug in einer der Ebenen erkannt wird, sodass die Änderung der Opazität unmittelbar erfolgt und die Ebene, in welcher der Bedrohungszustand erkannt wird, sofort visualisiert wird; und
Anweisungen zu erzeugen, um die Ebene in der Opazität der Ebene anzuzeigen.

2. System nach Anspruch 1, wobei eine aus der Vielzahl von Anzeigen (342) eine laterale Situationsanzeige ist.

3. System nach Anspruch 1, wobei eine aus der Vielzahl von Anzeigen (342) eine vertikale Situationsanzeige ist.

4. System nach Anspruch 1, wobei eine aus der Vielzahl von Anzeigen (342) eine synthetische Situationsanzeige ist.

5. System nach Anspruch 1, wobei die Ebene Gebietsdaten zeigt.

6. System nach Anspruch 1, wobei die Ebene Navigationsfixdaten zeigt.

7. System nach Anspruch 1, wobei die Opazität der Ebene Bild für Bild erhöht wird, wenn die Ebene zu einer der Vielzahl von Anzeigen (342) hinzugefügt wird.

8. System nach Anspruch 1, wobei die Opazität der Ebene Bild für Bild reduziert wird, wenn die Ebene aus einer der Vielzahl von Anzeigen (342) entfernt wird.

## Revendications

1. Système pour générer un affichage animé pour un aéronef (102), comprenant :
un système de gestion de vol (320) configuré pour contrôler un ou plusieurs systèmes de contrôle de l'aéronef (102) sur la base des données du plan de vol pour l'aéronef (102) ; et
un système d'affichage de couches cartographiques (340) qui est contrôlé par le système de gestion de vol (320), comprenant :
une pluralité d'affichages (342) installés à bord de l'aéronef, dans le poste de pilotage, où chacun de la pluralité d'affichages (342) montre une vue différente des données du plan de vol ;
un système d'interface utilisateur (348) configuré pour recevoir des entrées de l'utilisateur; et
un processeur (344) couplé de manière communicative à la pluralité d'affichages (342) et au système d'interface utilisateur (348), le processeur (344) étant configuré pour :
déterminer lorsque l'entrée de l'utilisateur reçue par le système d'interface utilisateur (348) correspond à une couche sur l'un parmi la pluralité d'affichages (342) ;
augmenter l'opacité de la couche de zéro pour cent à cent pour cent à un taux de changement prédéterminé lorsque l'entrée de l'utilisateur inclut une demande pour ajouter la couche à l'un parmi la pluralité d'affichages (342), où l'opacité est augmentée au taux de changement prédéterminé en traitant une boucle logique, dans laquelle à chaque passage à travers la boucle logique, l'opacité augmente d'un delta de fondu prédéterminé, ce qui représente le taux de changement de l'opacité pour une valeur inférieure à 100 % ;
diminuer l'opacité de la couche de cent pour cent à zéro pour cent à un taux de changement prédéterminé lorsque l'entrée de l'utilisateur inclut une demande pour retirer la couche de l'un parmi la pluralité d'affichages (342), où l'opacité est diminuée au taux de changement prédéterminé en traitant une boucle logique, dans laquelle à chaque passage à travers la boucle logique, l'opacité diminue d'un delta de fondu prédéterminé, ce qui représente le taux de changement de l'opacité pour une valeur inférieure à 100 % ; et dans lequel le processeur est en outre configuré pour remplacer le taux de changement prédéterminé de l'opacité lorsqu'une condition de menace pour l'aéronef est détectée dans l'une des couches de sorte que le changement d'opacité soit instantané et la couche pour laquelle la condition de menace est détectée soit visualisée immédiatement ; et
générer des instructions pour afficher la couche à l'opacité de la couche.

2. Système de la revendication 1, où l'un parmi la pluralité d'affichages (342) est un affichage de situation latérale.

3. Système de la revendication 1, où l'un parmi la pluralité d'affichages (342) est un affichage de situation verticale.

4. Système de la revendication 1, où l'un parmi la pluralité d'affichages (342) est un affichage de situation synthétique.

5. Système de la revendication 1, où la couche montre des données de terrain.

6. Système de la revendication 1, où la couche montre des données de repères de navigation.

7. Système de la revendication 1, où l'opacité de la couche est augmentée image par image lorsque la couche est ajoutée à l'un parmi la pluralité d'affichages (342).

8. Système de la revendication 1, où l'opacité de la couche est diminuée image par image lorsque la couche est retirée de l'un parmi la pluralité d'affichages (342).
